# EUROPÄISCHE PATENTANMELDUNG

(11) **EP 0 937 598 A2**
(43) Veröffentlichungstag der Anmeldung: **25.08.1999**
(21) Anmeldenummer: 99890009.6
(22) Anmeldetag: 20.01.1999
(51) Int. Cl.: B60J 7/057

(54) **Verfahren zur Steuerung einer Betätigungsanordnung für bewegliche Teile an Fahrzeugen und Betätigungsanordnung**

(30) Priorität: 19.02.1998 AT 30198
(71) Anmelder: Hoerbiger Hydraulik GmbH, 86956 Schongau (DE)
(72) Erfinder: Hollerbach, Bernhard, 86989 Steingaden (DE)
(74) Vertreter: Laminger, Norbert, Mag.

(57) **Zusammenfassung**

Ein Verfahren zur Steuerung einer Betätigungsanordnung für bewegliche Teile an Fahrzeugen, insbesonders für Heckdeckel, Verdeck-Abdeckungen od. dgl., in welcher Anordnung der zu bewegende Teil am Fahrzeug mittels zumindest eines Verbindungselementes angelenkt und mit einem steuerbaren Antriebsmittel versehen ist, wobei eine Geschwindigkeit des beweglichen Teils (8) überwacht und das Antriebsmittel (17, 18) unabhängig von allfälligen Endlagensignalen abgeschaltet wird, wenn die Geschwindigkeit eines dieser Teile sehr klein wird oder gleich Null ist, soll ein manuelles Stoppen der Bewegung des automatisch betätigten beweglichen Teils am Fahrzeug zulassen bzw. eine Notabschaltfunktion für die Öffnung- oder Schließbewegung bei Anfahren an ein Hindernis bieten. Dazu wird die Geschwindigkeit des beweglichen Teils (8) indirekt über die Ermittlung der Geschwindigkeit zumindest eines, mit diesem Teil (8) in Verbindung stehenden Verbindungselementes (2, 3; 10 - 12, 16) oder Antriebsmittels (17, 18) überwacht.

## Beschreibung

Die Erfindung bezieht sich auf ein Verfahren zur Steuerung einer Betätigungsanordnung für bewegliche Teile an Fahrzeugen, insbesonders für Heckdeckel, Verdeck-Abdeckungen od. dgl., in welcher Anordnung der zu bewegende Teil am Fahrzeug mittels zumindest eines Verbindungselementes angelenkt und mit einem steuerbaren Antriebsmittel versehen ist, wobei eine Geschwindigkeit des beweglichen Teils überwacht und das Antriebsmittel unabhängig von allfälligen Endlagensignalen abgeschaltet wird, wenn die Geschwindigkeit eines dieser Teile sehr klein wird oder gleich Null ist, und eine Betätigungsanordnung für bewegliche Teile an Fahrzeugen, insbesonders für Heckdeckel, Verdeck-Abdeckungen od. dgl., mit einer Anlenkung des zu bewegenden Teils am Fahrzeug, einem Antriebsmittel, Sensoren und einer mit dem Antriebsmittel und den Sensoren verbundenen Steuereinheit, die mit zumindest einem Sensor in Verbindung steht, aus dessen Signalen einen Geschwindigkeitswert ermittelt und das Antriebsmittel abschaltet, sobald zumindest ein Sensor Signale abgibt, die eine sehr kleine Geschwindigkeit oder eine Geschwindigkeit gleich Null des beweglichen Teils am Fahrzeug repräsentieren.

Heckklappen oder Heckdeckel werden in zunehmendem Maße automatisch geöffnet und/oder geschlossen, was vorzugsweise über elektrische oder hydraulische Antriebe realisiert ist. Um die Öffnungs- bzw. Schließbewegung starten zu können, um diese Bewegung abzuschließen, im Bewegungsablauf Ventile zu schalten oder Drücke zu steuern od. dgl., sind Informationen über die jeweilige Stellung des Heckdeckels oder eines anderen beweglichen Teils am Fahrzeug, beispielsweise Motorhauben, automatische Türen, etc., erforderlich. Diese Informationen werden der Steuereinheit mittels Endlagenschalter, Fühler für Zwischenstellungen und ähnliche Einrichtungen geliefert.

Die herkömmlichen Steuerungen haben aber den Nachteil, daß in den bestehenden Systemen ein Stoppen der Bewegung des Heckdeckels oder anderen beweglichen Teils am Fahrzeug von Hand aus nicht möglich ist, da der Antrieb weiterläuft bis die vorgegebene Endstellung erreicht ist. Dies stellt überdies ein Sicherheitsrisiko dar, da auch dann die Bewegung des beweglichen Teils nicht gestoppt wird, falls beispielseweise jemand eingeklemmt wird oder der bewegliche Teil gegen irgendein Hindernis stößt. Neben der Gefährung der Gesundheit von Personen kann diese ungebremste Bewegung auch zu bedeutenden Beschädigungen am Fahrzeug führen. In der DE-OS 196 49 698 ist eine Steuervorrichtung für angetriebene Absperrungen, insbesondere für Anwendungen bei Fahrzeugen, beschrieben. Gemäß den dortigen Ausführungen zur Hindernisfeststellung sind keinerlei Hinweise auf die tatsächlich überwachten Bauteile vorhanden oder wird auch nur auf die Problematik der Geschwindigkeitsmessung, speziell am bewegten Bauteil selbst, detailliert eingegangen. Vielmehr werden aufgrund von Problemen bei den bislang bekannten Methoden andere Wege vorgeschlagen, die auf einem Vergleich von Soll- und Istkraft an jedem Punkt des Weges der Öffnungs- oder Schließbewegung beruhen. Diese Kraft ist aber je nach räumlicher Orientierung des Fahrzeuges unterschiedlich und eine Berücksichtigung aller möglichen Lagen äußerst aufwendig und damit teuer.

Es ist daher die Aufgabe der vorliegenden Erfindung, ein Verfahren und eine Betätigungsanordnung anzugeben, welche die oben beschriebenen Nachteile vermeidet und bei einfacher Ausführung ein manuelles Stoppen der Bewegung des automatisch betätigten beweglichen Teils am Fahrzeug zuläßt bzw. eine Notabschaltfunktion für die Öffnung- oder Schließbewegung bei Anfahren an ein Hindernis bietet.

Diese Aufgabe wird durch ein Verfahren der eingangs angegebenen Art gelöst, das dadurch gekennzeichnet ist, daß die Geschwindigkeit des beweglichen Teils indirekt über die Ermittlung der Geschwindigkeit zumindest eines mit diesem Teil in Verbindung stehenden Verbindungselementes oder Antriebsmittels überwacht wird. Dadurch wird eine Sicherheits- und Komfortfunktion realisiert, die ein Anfahren des zu bewegenden Teils am Fahrzeug, sei es nun ein Heckdeckel, eine Motorhaube, eine Tür oder ein Fenster, an ein Hindernis durch die rasch abnehmende Geschwindigkeit bis zum Stillstand hin erkennt und den Antrieb in diesem Fall abschaltet. Starke Beschädigungen am Fahrzeug oder gravierende Verletzungen des Benutzers können dadurch verhindert werden. Diese Sicherheitsfunktion ist in jeder beliebigen Stellung des bewegten Teils gegeben, da die Geschwindigkeit über den gesamten Weg bzw. Öffnungs- oder Schließwinkel des Fahrzeugteils überwacht wird. Überdies ist auch das manuelle Stoppen der Bewegung durch Festhalten und Blockieren des bis dahin automatisch bewegten Fahrzeugteils in jeder beliebigen Stellung möglich.

Für Heckklappen, Motorhauben oder sonstige, um eine Schwenkachse oder mittels einer Scharnieranordnung bewegliche Fahrzeugteile ist es vorteilhaft, wenn eine Drehgeschwindigkeit zumindest eines Verbindungselementes oder Antriebsmittels überwacht wird. Diese Drehgeschwindigkeit steht in ursächlichem Zusammenhang mit der Bewegung des bewegten Teils und läßt somit die direkteste und unmittelbarste Ableitung von Steuersignalen zu.

Bei linear bewegten Fahrzeugteilen, beispielsweise Schiebetüren oder Fensterscheiben, aber auch bei verschwenkbaren Fahrzeugteilen, die durch im wesentlichen linear wirkende Antriebsmittel betätigt sind, kann gemäß einem weiteren Merkmal der Erfindung vorgesehen sein, daß eine im wesentlichen lineare Bewegung zumindest eines Verbindungselementes oder Antriebsmittels überwacht wird. Da die lineare Bewegung meist einen größeren Arbeitsweg aufweist, ist eine bessere Auflösung und ein feineres Reagieren auf Geschwindigkeitsveränderungen möglich.

Insbesonders bei bewegten Fahrzeugteilen, die über Anordnungen mit mehreren Einzelbauteilen am Fahrzeug beweglich angebracht sind, beispielsweise über Viergelenkscharniere angelenkte Heckklappen od. dgl., ist eine größere Freiheit für die Wahl der Position des Sensors möglich, wenn die Relativbewegung zweier miteinander verbundener Bauteile eines Verbindungselementes, eines Antriebsmittels oder dieser Elemente überwacht wird.

Vorteilhafterweise wird gemäß einem weiteren Merkmal der Erfindung der zurückgelegte Weg bzw. Drehweg ermittelt und in der Steuereinheit durch Differentiation nach der Zeit ein Geschwindigkeitswert ermittelt. Dies ist eine Variante des erfindungsgemäßen Verfahrens, die mit einfachen und funktionssicheren Bauteilen realisiert werden kann und auch in der Steuereinheit rechentechnisch einfach und rasch durchführbar ist, sodaß schnelle Reaktionszeiten und damit schnelles Ansprechen der Abschaltautomatik und höchste Sicherheit.

Die eingangs beschriebene Betätigungsanordnung ist zur Lösung der gestellten Aufgabe dadurch gekennzeichnet, daß der oder jeder Sensor zur Ermittlung des Geschwindigkeitswertes an der Anlenkung und/oder dem Antriebsmittel vorgesehen ist. Die Sensoren können dabei unmittelbar einen Geschwindigkeitswert liefern oder auch Informationen über den vom bewegten Teil zurückgelegten Weg bzw. Drehwinkel an die Steuereinheit übermitteln. In letzterem Fall wird vorzugsweise softwaremäßig oder durch fest verdrahtete Schaltungen in der Steuereinheit eine Differentiation nach der Zeit durchgeführt, um die Geschwindigkeit des bewegten Teils, etwa einer Heckklappe oder einer automatischen Tür, zu berechnen. Ebenfalls können die Bereiche der Geschwindigkeitsänderungen bzw. allenfalls absolute Geschwindigkeitswerte softwaremäßig oder fest verdrahtet vorgegeben sein, welche die Steuereinheit als Referenzwert für die automatische Abschaltung des Antriebsmittels heranzieht. In jedem Fall schaltet bei rascher Geschwindigkeitsabnahme bzw. bei Unterschreiten einer vorgegeben Geschwindigkeit, vorzugsweise bei Ermittlung des Stillstandes des bewegten Fahrzeugteils, die Steuereinheit das Antriebsmittel ab.

Ein einfacher und funktionssicherer Aufbau ergibt sich, wenn ein linearer Wegsensor vorzugsweise mit dem Antriebsmittel, insbesonders mit einem hydraulischen Arbeitszylinder, verbunden ist.

Andererseits kann eine sehr kompakte Anordnung erzielt werden, wenn gemäß einem weiteren Merkmal der Erfindung ein Drehwinkelsensor an oder direkt in einem Gelenk der Anlenkung, insbesonders einer Scharnieranordnung, bzw. deren Anbindung an das Antriebsmittel angebracht ist.

Vorteilhafterweise ist der Sensor als berührungsloser Schalter ausgeführt, vorzugsweise als Hall-Sensor mit Meßmarken-Magneten bzw. magnetischen Bereichen als Meßmarken, wodurch keinerlei mechanische Beeinflussung der Bewegung des bewegten Fahrzeugteils erfolgt, beispielsweise auch kein Blockieren zu fürchten ist, falls der Sensor ausfällt.

Eine leicht justierbare und zur Wartung zugängliche Anordnung ist gegeben, wenn das Sensorgehäuse an einem Hebel der Anlenkung des beweglichen Teils angebracht und ein Riemenantrieb von einer Anlenkung des Hebels auf die Drehscheibe des Sensors läuft.

In der nachfolgenden Beschreibung soll die Erfindung unter Bezugnahme auf die beigefügten Zeichnungen näher erläutert werden.

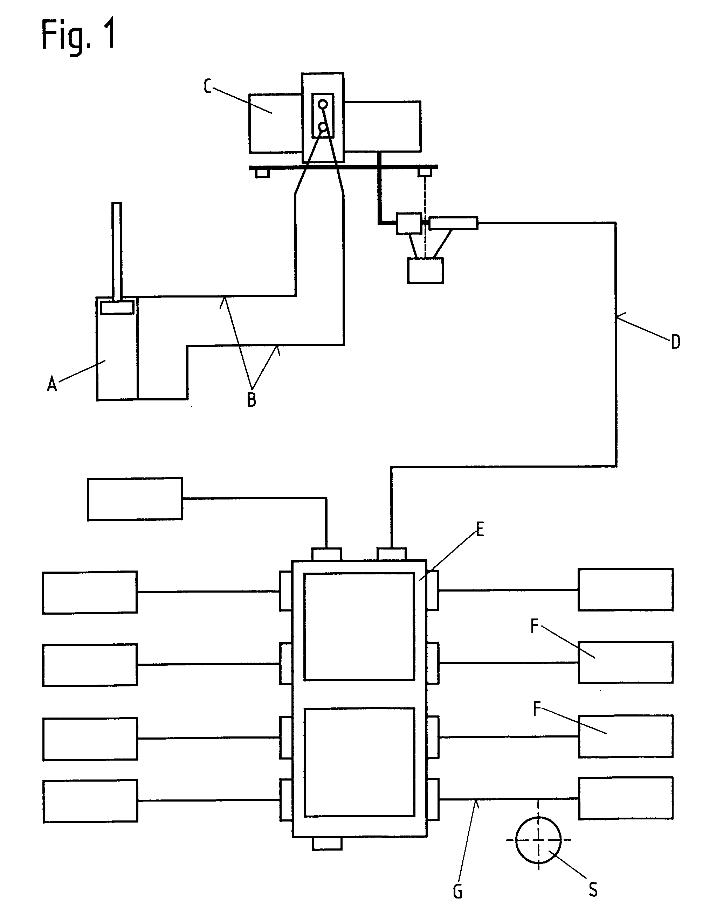

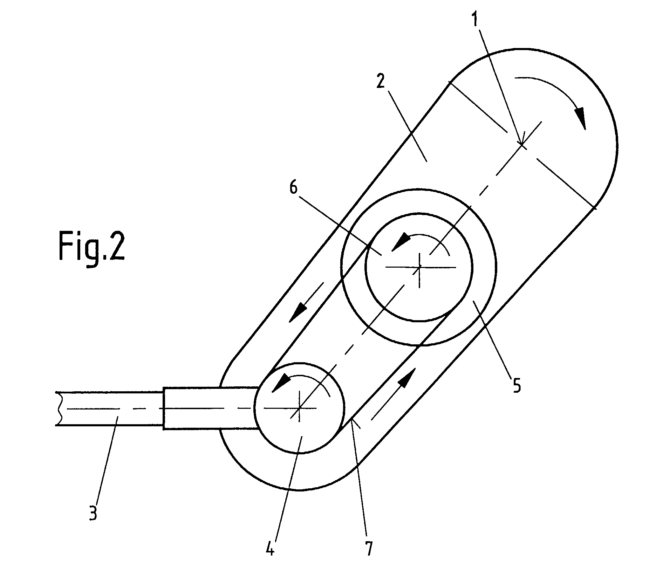

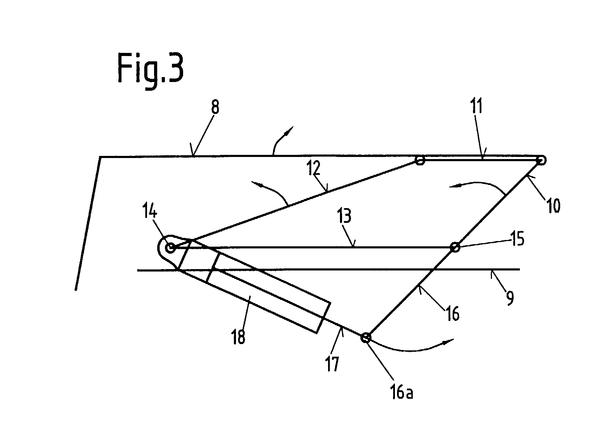

Die Fig. 1 zeigt schematisch eine Betätigungsanordnung zur Durchführung des erfindungsgemäßen Verfahrens, Fig. 2 zeigt eine erste Ausführungsform für die Anbringung eines Sensors zur Geschwindigkeitsüberwachung für bewegte, am Fahrzeug angebrachte Bauteile und Fig. 3 ist eine andere Ausführungsform der Anbringung im Fall eines Viergelenkscharniers.

In Fig. 1 ist eine Betätigungsanordnung, vorzugsweise für ein Verdeck eines Cabrios, in einer schematischen Übersicht dargestellt, wobei zumindest ein auf zumindest einen Teil des Verdecks einwirkender, vorzugsweise doppeltwirkender Arbeitszylinder A über die Hydraulikleitungen B mit Druckfluid, vorzugsweise Hydrauliköl, versorgt wird. Der Tank für das Druckfluid, die Pumpe und deren Motor sind vorzugsweise zusammen im Aggregat C untergebracht, das über eine Steuerleitung D mit der Steuereinheit E verbunden ist. Diese Steuereinheit E wiederum frägt zumindest ein Bedienungselement F ab, das vom Benutzer je nach der gewünschten Aktion betätigt wird, beispielsweise einen Kippschalter od. dgl., oder frägt zwei Bedienungselemente F ab, von welchen eines für das Schließen des Verdecks und das andere für das Öffnen des Verdecks gedacht sind. Zur Steuereinheit E führt aber auch eine Signalleitung G von einem Sensor S, der - wie nachfolgend näher erläutert - die Geschwindigkeit des Verdecks, eines damit verbundenen Teils, vorzugsweise eines Teils der Anlenkung am Fahrzeug, oder des Betätigungsmittels, d.h. des Hydraulikzylinders A ermittelt.

Als spezielles Ausführungsbeispiel für die Anbringung und Position des Sensors S ist in Fig. 2 ein am Fahrzeug um eine Drehachse 1 mittels eines nicht dargestellten Antriebes verschwenkbarer erster Hebel 2 dargestellt. Am der Drehachse 1 gegenüberliegenden Ende des Hebels 2 ist eine weitere Betätigungsstange 3 angelenkt, die direkt oder über weitere Zwischenelemente das zu bewegende Fahrzeugteil, insbesondere eine Heckklappe oder eine Verdeck-Abdeckung bei einem Cabrio, bewegt. Mit dem am Hebel 2 angelenkten Kopf der Betätigungsstange 3 ist eine erste Riemenscheibe 4 drehfest verbunden. Am Hebel 2 ist auch das Gehäuse 5 beispielsweise eines Drehwinkelsensors S fest angebracht, in welchem Gehäuse 5 ein die Meßmarken tragender Sensorteil drehbar gelagert und mit einer zweiten Riemenscheibe 6 drehfest verbunden ist. Beide Riemenscheiben 4, 6 sind über den Riemen 7 miteinander bewegungsmäßig gekoppelt, sodaß eine Verschwenkung des Hebels 2 um seine Drehachse 1-welche mittelbar auch die Heckklappe od. dgl. bewegt - vom Sensor S im Gehäuse 5 erfaßt und die jeweilige Stellung der Steuereinheit E mitgeteilt werden kann. In dieser Steuereinheit E findet dann die Weiterverarbeitung, insbesondere eine Differentiation der Stellungssignale nach der Zeit zur Ableitung eines Geschwindigkeitswertes für die Heckklappe, statt.

Eine andere, etwas aufwendigere Anordnung ist schematisch in Fig. 3 dargestellt, wo beispielsweise ein Heckdeckel 8 eines Fahrzeugs an dessen Karosserie, vorzugsweise im Bereich von dessen Regenrinne 9, über ein Viergelenkscharnier 10 - 13, als Beispiel für ein Mehrgelenkscharnier, angebunden ist. Dabei ist der Heckdeckel 8 am Scharnieroberteil 11 mit seinen fahrzeugfernen Drehpunkten befestigt. Das Scharnierunterteil 13 und die fahrzeugnäheren Drehpunkte 14, 15 sind beispielsweise an einer Seitenflanke der Regenrinne 9 plaziert. Die Schwenkbewegung zum Öffnen und Schließen des Heckdeckels 8 wird durch die unterschiedliche Länge der beiden Scharnierhebel 10 und 12 bei deren Verschwenkung bewirkt.

Der Scharnierhebel 10 ist nun über den Drehpunkt 15 hinaus nach innen mit einem Innenhebel 16 verlängert, an welchem die Kolbenstange 17 eines als Antriebsmittel eingesetzten Hydraulikzylinders 18 an der Anbindung 16a angreift. Zur Erfassung der Bewegung des Heckdeckels 8 kann nun beispielsweise ein linearer Wegsensor S an der Zylinder-Kolbenstangen-Einheit 17, 18 angebracht und mit der Steuereinheit E verbunden sein. Um eine sehr kompakte Anordnung zu erzielen ist aber bevorzugt wiederum ein Drehwinkelsensor im Bereich des Drehpunktes 15 des Viergelenkscharniers 10 - 13 vorgesehen, vorzugsweise direkt im Gelenk des Drehpunktes 15 selbst, dessen Stellungssignale in der Steuereinheit E nach der Zeit differenziert und in die Geschwindigkeit der Bewegung der Heckklappe 8 repräsentierende Signale umwandelt werden. Wenn diese Signale eine in kurzer Zeit stark abfallende Geschwindigkeit oder eine Geschwindigkeit im wesentlichen gleich Null anzeigen, schaltet die Steuereinheit das Antriebsmittel 17, 18 ab.

## Patentansprüche

1. Verfahren zur Steuerung einer Betätigungsanordnung für bewegliche Teile an Fahrzeugen, insbesonders für Heckdeckel, Verdeck-Abdeckungen od. dgl., in welcher Anordnung der zu bewegende Teil am Fahrzeug mittels zumindest eines Verbindungselementes angelenkt und mit einem steuerbaren Antriebsmittel versehen ist, wobei eine Geschwindigkeit des beweglichen Teils (8) überwacht und das Antriebsmittel (17, 18) unabhängig von allfälligen Endlagensignalen abgeschaltet wird, wenn die Geschwindigkeit eines dieser Teile sehr klein wird oder gleich Null ist, dadurch gekennzeichnet, daß die Geschwindigkeit des beweglichen Teils (8) indirekt über die Ermittlung der Geschwindigkeit zumindest eines, mit diesem Teil (8) in Verbindung stehenden Verbindungselementes (2, 3; 10 - 12, 16) oder Antriebsmittels (17, 18) überwacht wird.

2. Verfahren nach Anspruch 1, dadurch gekennzeichnet, dap eine Drehgeschwindigkeit zumindest eines Verbindungselementes (2, 3; 10 - 12, 16) oder Antriebsmittels (17, 18) überwacht wird.

3. Verfahren nach Anspruch 1, dadurch gekennzeichnet, daß eine im wesentlichen lineare Bewegung zumindest eines Verbindungselementes oder Antriebsmittels (17, 18) überwacht wird.

4. Verfahren nach Anspruch 2 oder 3, dadurch gekennzeichnet, daß die Relativbewegung zweier miteinander verbundener Bauteile (2, 3) eines Verbindungselementes (2, 3; 10 - 12, 16), eines Antriebsmittels (17, 18) oder dieser Elemente untereinander überwacht wird.

5. Verfahren nach einem der vorhergehenden Ansprüche, dadurch gekennzeichnet, daß der zurückgelegte Weg bzw. Drehweg ermittelt und in der Steuereinheit (E) durch Differentiation nach der Zeit ein Geschwindigkeitswert ermittelt wird.

6. Betätigungsanordnung für bewegliche Teile an Fahrzeugen, insbesonders für Heckdeckel, Verdeck-Abdeckungen od. dgl., mit einer Anlenkung des zu bewegenden Teils am Fahrzeug, einem Antriebsmittel, Sensoren und einer mit dem Antriebsmittel und den Sensoren verbundenen Steuereinheit (E), die mit zumindest einem Sensor (S) in Verbindung steht, aus dessen Signalen einen Geschwindigkeitswert ermittelt und das Antriebsmittel (17, 18) abschaltet, sobald zumindest ein Sensor (S) Signale abgibt, die eine sehr kleine Geschwindigkeit oder eine Geschwindigkeit gleich Null des beweglichen Teils (8) am Fahrzeug repräsentieren, dadurch gekennzeichnet, daß der oder jeder Sensor (S) zur Ermittlung des Geschwindigkeitswertes an der Anlenkung (2, 3; 10 - 12, 16) und/oder dem Antriebsmittel (17, 18) vorgesehen ist.

7. Anordnung nach Anspruch 6, dadurch gekennzeichnet, daß ein linearer Wegsensor (S) vorzugsweise mit dem Antriebsmittel (17, 18), insbesonders mit einem hydraulischen Arbeitszylinder (A), verbunden ist.

8. Anordnung nach Anspruch 6, dadurch gekennzeichnet, daß ein Drehwinkelsensor (S) an oder direkt in einem Gelenk (15) der Anlenkung, insbesonders einer Scharnieranordnung (2, 3; 10 - 12, 16) bzw. deren Anbindung (16a) an das Antriebsmittel (17, 18) angebracht ist.

9. Anordnung nach einem der Ansprüche 6 bis 8, dadurch gekennzeichnet, daß der Sensor (S) als berührungsloser Schalter ausgeführt ist, vorzugsweise als Hall-Sensor mit Meßmarken-Magneten bzw. magnetische Bereichen als Meßmarken.

10. Anordnung nach einem der Ansprüche 6 bis 9, dadurch gekennzeichnet, daß das Sensorgehäuse (5) an einem Hebel (2) der Anlenkung des beweglichen Teils (8) angebracht und ein Riemenantrieb (4, 5, 7) von einer Anlenkung (4) des Hebels (2) auf die Drehscheibe (6) des Sensors (5) läuft.
